(19) **Europäisches Patentamt European Patent Office Office européen des brevets**

(11) **EP 1 291 670 B1**

(12) **FASCICULE DE BREVET EUROPEEN**

(45) Date de publication et mention
de la délivrance du brevet:
**19.03.2008 Bulletin 2008/12**

(51) Int Cl.:
***G01S 13/42*** *(2006.01)*

(21) Numéro de dépôt: **02292200.9**

(22) Date de dépôt: **06.09.2002**

(54) **Procédé de détermination de l'azimut d'une cible, par un radar notamment du type ASR**

Verfahren zur Bestimmung des Azimuts eines Zieles mittels eines ASR-Radars

Method for determining the azimuth of a target using an ASR radar

(84) Etats contractants désignés:
**AT BE BG CH CY CZ DE DK EE ES FI FR GB GR IE IT LI LU MC NL PT SE SK TR**

(30) Priorité: **07.09.2001 FR 0111620**

(43) Date de publication de la demande:
**12.03.2003 Bulletin 2003/11**

(73) Titulaire: **Thales**
**75008 Paris (FR)**

(72) Inventeur: **Phelipot, Michel,**
**Thales Intellectual Property**
**94117 Arcueil Cedex (FR)**

(74) Mandataire: **Lucas, Laurent Jacques**
**Marks & Clerk France**
**31-33 Avenue Aristide Briand**
**94117 Arcueil Cedex (FR)**

(56) Documents cités:
**RU-C- 2 117 963**      **US-B1- 6 201 496**

- **MACHUZAK R J ET AL: "New centroid algorithm based upon amplitude-angle signature" IEEE TRANSACTIONS ON AEROSPACE AND ELECTRONIC SYSTEMS, IEEE INC. NEW YORK, US, vol. AES-19, no. 4, juillet 1983 (1983-07), pages 568-576, XP002112776 ISSN: 0018-9251**

**Description**

La présente invention concerne un procédé de détermination de l'azimut d'une cible par un radar, notamment du type ASR, initiales de l'expression anglo-saxonne Airport Surveillance Radar. Elle s'applique donc notamment pour des radars de surveillance, utilisés par exemple dans des applications de gestion du trafic aérien.

La mission d'un radar primaire est non seulement d'indiquer la présence de cibles d'intérêt dans sa zone de détection, mais aussi de fournir des informations relatives à ces cibles, en particulier leurs positions en distance et en azimut. Les radars primaires utilisés par exemple pour le contrôle du trafic aérien sont essentiellement des radars à deux dimensions classiques. Ils n'utilisent pas les techniques de type monopulse pour élaborer l'information d'azimut, notamment pour des raisons d'économie. Dans ces conditions cette information d'azimut est obtenue le plus souvent par des méthodes de calcul du type barycentre où l'azimut des différentes détections qui composent le plot est pondéré par leur amplitude.

Dans les radars anciens, il y avait un nombre important d'informations de détections d'une cible par période d'éclairement de la cible, car ces radars n'avaient pas de traitement Doppler. A titre d'exemple, pour un temps d'éclairement classique de 15 ms d'un radar d'approche émettant une récurrence toutes les 1ms environ, cela donnait 15 zones de récurrence et donc 15 détections.

Les radars à traitement Doppler utilisés par la suite réalisaient un filtrage glissant sur n dernières récurrences de sorte qu'une quantité non négligeable d'informations demeurait.

Puis, les techniques de filtrage Doppler MTD (Mobile Target Detector) combinées à un fonctionnement en régime de rafales utilisées pour améliorer la détection des cibles en présence de clutter de sol ou de pluie ont eu pour conséquence de réduire drastiquement le nombre de détections sur chaque cible. Dans de nombreux cas, il n'y a plus que une ou deux détections sur les cibles lointaines ou à faible surface équivalente radar. Pour donner un ordre de grandeur en se référant à l'exemple précédent, on est donc passé de 15 à 2 informations de position par rafale, c'est-à-dire le nombre d'informations utilisables pour faire une extraction de position en azimut.

L'émergence des émetteurs à état solide à large bande instantanée qui permettent le fonctionnement sur deux fréquences pour améliorer la détection par effet de diversité a pour conséquence supplémentaire que le nombre de détections sur chacune des fréquences est encore divisé par deux.

A fréquence fixe, avec deux informations de détection, il est encore possible de faire une extraction de position en azimut. Avec l'utilisation de deux fréquences, le nombre de détections étant divisé par deux, il n'y a plus qu'une seule détection par cible. On ne peut ainsi qu'associer l'azimut de la cible à l'azimut de la détection. On peut alors considérer en première approximation que l'erreur est distribuée sur plus ou moins une demi-largeur du lobe d'antenne. L'erreur de position devient ainsi importante.

Un but de l'invention est notamment d'améliorer la précision en azimut d'un radar par exemple du type ASR. A cet effet, l'invention a pour objet un procédé de détermination de l'azimut d'une cible par un radar, le radar émettant une onde de détections par rafales de N impulsions. Le procédé comporte au moins les étapes suivantes à une rafale :

- une étape où la rafale est scindée en au moins deux demi-rafales, une rafale avant et une rafale arrière ;
- une étape de filtrage des demi-rafales pour associer une valeur d'azimut $\theta_1$ et une valeur d'amplitude $A_1$ à la rafale avant, et une valeur d'azimut $\theta_2$ et une valeur d'amplitude $A_2$ à la rafale arrière ;
- une étape d'obtention de l'azimut Az de la cible comme correspondant au maximum d'une gaussienne passant par les points de composantes $(\theta_1, A_1)$, $(\theta_2, A_2)$.

De préférence, les demi-rafales avant et arrière ont le même nombre d'impulsions, N/2.

L'invention a pour principaux avantages qu'elle permet d'améliorer de manière importante les performances de discrimination de deux cibles situées à la même distance et faiblement séparées en azimut, qu'elle ne complique pas le traitement radar et qu'elle est simple à mettre en oeuvre.

D'autres caractéristiques et avantages de l'invention apparaîtront à l'aide de la description qui suit faite en regard de dessins annexés qui représentent :

- la figure 1, deux diagrammes d'une même antenne correspondant à deux fréquences d'émission $f_1$, $f_2$ différentes ;
- la figure 2, des étapes possibles du procédé selon l'invention ;
- la figure 3, un diagramme d'antenne obtenu à partir de deux points d'azimuts $\theta_1$, $\theta_2$ prédéterminés.

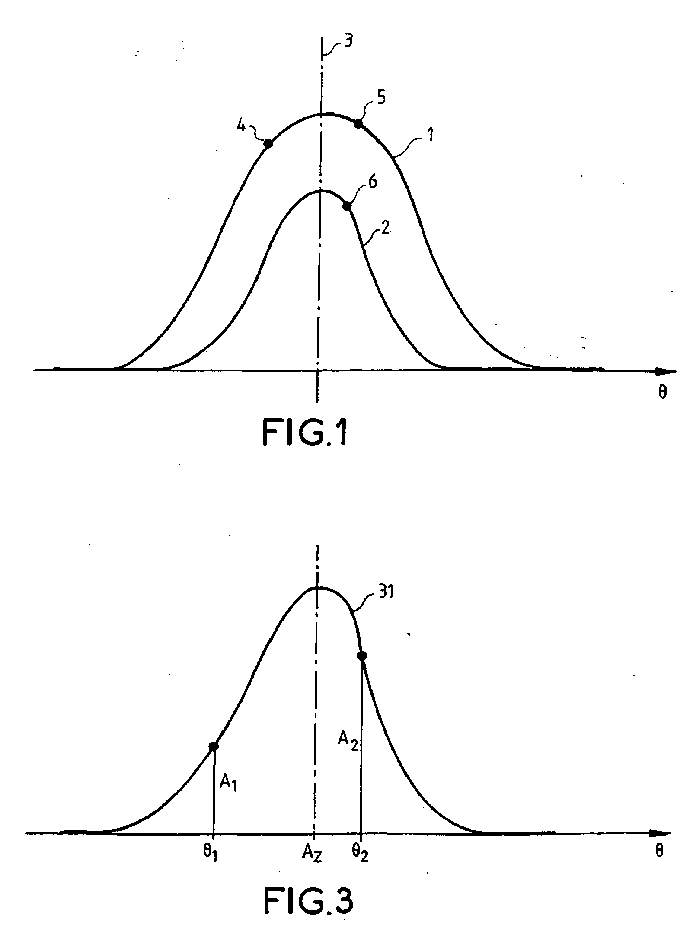

La figure 1 illustre deux diagrammes d'antenne d'un radar en fonction de l'angle d'azimut $\theta$. Ces deux diagrammes représentent donc le gain de l'antenne et par conséquent le signal reçu en fonction de cet angle. Une première courbe 1, de forme gaussienne, représente le signal reçu à une fréquence $f_1$. Une deuxième courbe 2, toujours de forme gaussienne, représente le signal reçu à une fréquence $f_2$. Ces diagrammes sont sensiblement symétriques par rapport à l'axe de visée 3 de l'antenne. Comme indiqué précédemment, on est ici dans le cas d'un radar fonctionnant sur deux fréquences dans le but notamment d'augmenter la probabilité de détection. Le premier diagramme d'antenne 1 permet par exemple de faire deux détections illustrées par deux plots 4, 5 alors que le deuxième diagramme d'antenne ne permet de faire qu'une seule détection illustrée par un plot 6. Ces plots indiquent la position des échos de cible dans les diagrammes d'antennes. De la présence de ces échos après chaque rafale d'émission du radar, on en déduit notamment la position en azimut de la cible symbolisé par la position d'un centre plot.

Classiquement le calcul du centre plot en azimut se déroule en deux étapes. On considère pour cela un amas de présences d'écho que l'on suppose résulter d'une cible unique et relative à deux types de veille, selon que la cible est dans le domaine distance proche ou lointain. Le terme « amas » désigne un regroupement de présences d'écho associées entre elles selon des critères de connexité en distance et en azimut.

Dans une première étape, pour chaque fréquence, on calcule un azimut du sous-plot correspondant à cette fréquence. Un sous-plot désigne ici le regroupement de toutes les présences d'écho d'un amas appartenant à une fréquence donnée. Un amas peut donc être composé de deux sous-plots ou d'un seul sous-plot. Si les présences d'écho d'un sous-plot n'appartiennent qu'à une seule interrogation radar ou rafale, cas d'un sous-plot dit mono-rafale, l'azimut de ce sous-plot est alors l'azimut de l'interrogation, c'est-à-dire l'azimut de l'antenne à l'instant du milieu de la rafale. Si le sous-plot est composé de présences d'écho appartenant à au moins deux interrogations adjacentes de même fréquence, cas d'un sous-plot multi-rafales, son azimut est alors calculé à partir de la présence d'écho de l'amas d'amplitude brute maximale et de celle de la même case distance et de la rafale adjacente en faisant une hypothèse de lobe d'antenne gaussien.

Dans une deuxième étape, l'azimut du centre plot est alors une moyenne de l'azimut des sous-plots s'ils ont été calculés par la même méthode, ils sont alors tous les deux mono ou multi-rafales. Dans le cas où un seul est multi-rafales, c'est alors son azimut qui est conservé car considéré comme étant de meilleure qualité.

La figure 1 montre qu'il peut n'y avoir qu'une seule détection ou présence d'écho 6 pour une cible. Le plot est de ce fait composé d'un seul sous-plot mono-rafale. L'azimut retenu est alors quantifié au pas des rafales, c'est-à-dire de l'ordre de 2 degrés par exemple correspondant à la largeur en azimut du lobe d'antenne. Dans ces conditions, l'erreur peut atteindre théoriquement $\pm 1°$ avec un écart type de 0,57°, soit $2°/\sqrt{12}$. Dans la réalité les erreurs peuvent être un peu plus faibles car lorsque la cible est centrée entre deux rafales, soit son rapport signal sur bruit est trop faible pour qu'elle soit détectée en raison du dépointage, soit elle répond sur deux rafales, auquel cas la précision redevient correcte. Il n'en reste pas moins que pour des rapports signal sur bruit notamment inférieurs à 25dB avant intégration cohérente, l'écart type de l'erreur d'azimut reste nettement supérieur à une valeur d'objectif, par exemple d'environ 0,1°.

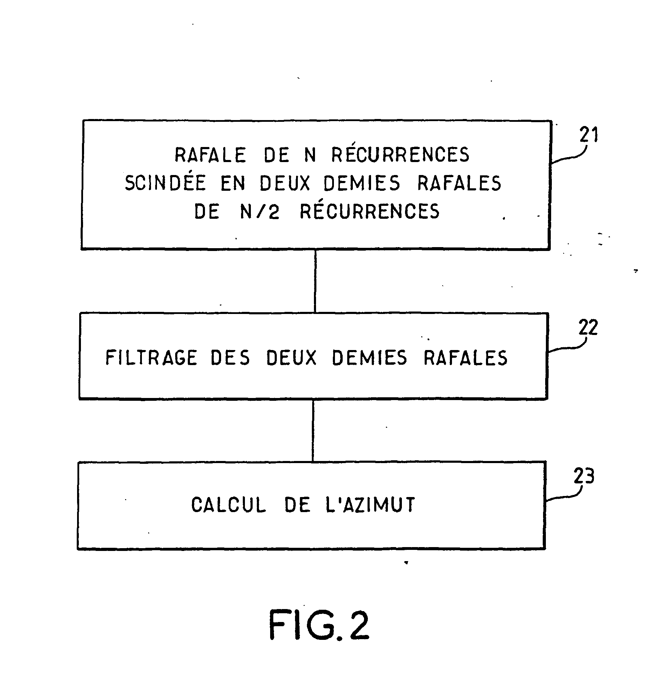

La figure 2 illustre les étapes possibles du procédé selon l'invention appliqué à chaque rafale d'émission, le radar émettant une onde détection par rafales d'impulsions. On a vu précédemment que c'est le filtrage Doppler MTD utilisé pour améliorer la détection dans le clutter, où le rapport signal sur bruit est diminué, qui réduit le nombre d'informations utilisables. On a vu aussi qu'un tel filtrage, nécessitant d'augmenter le nombre de récurrences par rafales d'émission, avait pour effet de réduire le nombre d'informations de détections, nombre encore réduit par l'utilisation de deux fréquences notamment comme l'illustre la figure 1.

Le procédé selon l'invention utilise notamment le fait, qu'avant filtrage Doppler, les différentes récurrences qui composent une rafale à fréquence d'émission constante sont modulées en amplitude par le lobe d'antenne. L'invention montre qu'il est alors possible d'en extraire l'azimut de la cible en faisant l'hypothèse d'un lobe d'antenne gaussien de la même façon que dans le calcul d'un sous-plot multi-rafales. Pour conserver une capacité de séparation de la cible et du clutter, la rafale de N impulsions est découpée fictivement en deux demi-rafales de N/2 impulsions. Ces deux demi-rafales sont alors filtrées par un banc de filtres d'ordre N/2.

Le procédé selon l'invention comporte donc une étape 21 où une rafale de N récurrences est scindée en deux demi-rafales composées respectivement des N/2 premières récurrences, demi-rafale avant, et des N/2 dernières récurrences, demi-rafale arrière. Cette coupure fictive se fait par exemple à la réception, avant filtrage. De préférence, la rafale est séparée en deux groupes de N/2 impulsions. Cependant, la demi-rafale avant peut ne pas avoir le même nombre d'impulsions que la demi-rafale arrière. Il est par ailleurs possible de scinder la rafale en plus de deux rafales.

Dans une étape suivante 22 les deux demi-rafales sont filtrées. En sortie de filtre, on obtient les valeurs d'azimut $\theta_1$ et $\theta_2$ de l'antenne respectivement au centre de la demi-rafale avant et au centre de la demi-rafale arrière, ainsi que les amplitudes brutes $A_1$ et $A_2$ du signal reçu correspondant respectivement à la demi-rafale avant et à la demi-rafale arrière. Si la détection est assurée par les moyens de filtrage des rafales complètes, on peut disposer ainsi du double d'informations pour le calcul de l'azimut en utilisant le résultat du filtrage des deux demi-rafales. Pour minimiser la charge de traitement, on peut ne réaliser le filtrage des demi-rafales que dans les cellules où il y a eu détection, le filtre utilisé étant lui-même adressé par le rang du filtre où la détection a été observée. Le procédé selon l'invention ne complique donc pas le traitement radar. Il est particulièrement simple à mettre en oeuvre.

Dans une étape suivante 33, l'azimut de la cible est calculé à partir des résultats de filtrage des deux demi-rafales. Cette étape se fonde notamment sur le constat que généralement le lobe d'antenne a une forme sensiblement gaussienne en azimut, tout au moins dans la partie utile pour la détection des cibles de faible rapport signal sur bruit, c'est-à-dire autour du maximum du diagramme d'antenne. La connaissance de deux points du diagramme, de composantes ($\theta_1$, $A_1$) et ($\theta_2$, $A_2$), suffit alors pour déterminer la position du maximum. L'angle correspondant à ce maximum étant l'azimut recherché comme l'illustre la figure 3 qui présente une gaussienne 31 passant par ces deux points. Ainsi, si pour les azimuts $\theta_1$ et $\theta_2$ les amplitudes mesurées sur une cible sont $A_1$ et $A_2$, l'azimut Az de la cible est donné par la relation suivante :

$$Az = \left( \frac{\theta_1 + \theta_2}{2} \right) + \frac{\theta_{3dB}^2}{2a(\theta_1 - \theta_2)} Log \frac{A_1}{A_2} \qquad (1)$$

où $\theta_{3dB}$ est la largeur du lobe d'antenne du radar en azimut exprimée à -3dB et
a est une constante valant 8Log2, soit 5,54518.

Cette relation (1) est utilisée pour associer à toutes les détections un azimut de cible Az, une détection correspondant à la détermination des valeurs $\theta_1$, $\theta_2$, $A_1$, $A_2$.

Dans une étape ultérieure, l'azimut Az est par exemple utilisé comme critère d'association des détections en azimut pour la formation des plots au lieu de l'azimut de la détection, ou autrement dit l'azimut de la rafale, qui risque d'être entaché d'une erreur comme il a été vu précédemment. Cela a notamment comme avantage d'améliorer de manière importante les performances de discrimination de deux cibles situées à la même distance et faiblement séparées en azimut.

Pour un radar fonctionnant avec deux fréquences d'émission $f_1$, $f_2$, la réponse d'une cible est en principe composée de deux sous-plots SP1 et SP2, un pour chaque fréquence. L'azimut d'un sous-plot est par exemple déterminé conformément aux étapes précitées 21, 22, 23, notamment selon la relation (1).

Cependant, lorsqu'un sous-plot est composé d'au moins deux détections, il n'est plus nécessaire dans ce cas de découper fictivement la rafale en deux demi-rafales. La relation (1) peut être appliquée alors pour calculer un azimut pour ce sous-plot en utilisant les amplitudes rafales, et non plus demi-rafales, maximale de la détection principale et sous-maximale de la détection adjacente. Il est bien sûr toujours possible de ne retenir comme azimut du sous-plot l'azimut cible calculé pour cette détection.

Selon qu'un sous-plot est composé d'une unique détection ou non, c'est-à-dire selon qu'une rafale contient au niveau de la réception une ou plusieurs informations de détection, l'azimut de ce sous-plot est donc :

- l'azimut cible obtenu en utilisant les deux demi-rafales de la détection conformément aux étapes 21, 22, 23 du procédé, dans le cas d'une mono détection ;
- l'azimut cible obtenu en utilisant les deux rafales, ou détections, de ce sous-plot d'amplitude maximale et sous-maximale adjacente, dans le cas d'une multi-détection.

L'azimut cible obtenu à partir de deux sous-plots est toujours de meilleure qualité que celui d'un sous-plot mono détection car le filtrage Doppler utilisant N impulsions est plus performant et les deux mesures étant plus écartées, l'influence des bruits est moindre. On lui attribue donc plus d'importance, ce qui se traduit par l'obtention de l'azimut du plot en fonction des azimuts de deux sous-plots SP1, SP2 comme définie ci-dessous, les deux sous-plots SP1, SP2 étant par exemple ceux obtenus aux deux fréquences différentes $f_1$, $f_2$ :

- présence du seul sous-plot SP1 mono détection, l'azimut du plot est l'azimut du sous-plot SP1 ;
- présence du seul sous-plot SP2 mono détection, l'azimut du plot est l'azimut du sous-plot SP2 ;
- présence du sous-plot SP1 de composition mono détection et du sous-plot SP2 de composition mono détection, l'azimut du plot est la moyenne des azimuts des sous-plots SP1, SP2, c'est-à-dire que si $Az_1$ et $Az_2$ sont ces azimuts, l'azimut du plot est ($Az_1$ + $Az_2$)/2 ;
- présence du sous-plot SP1 de composition multi détection et du sous-plot SP2 de composition mono détection, l'azimut du plot est l'azimut du sous-plot SP1 ;
- présence du sous-plot SP1 de composition mono détection et du sous-plot SP2 de composition multi détection, l'azimut du plot est l'azimut du sous-plot SP2 ;
- présence du sous-plot SP1 et du sous-plot SP2, tous deux de composition multi détection, l'azimut du plot est la moyenne pondérée par les amplitudes des azimuts des sous-plots SP1 et SP2.

**Revendications**

**1.** Procédé de détermination de l'azimut d'une cible par un radar, le radar émettant une onde de détections par rafales de N impulsions, **caractérisé en ce qu**'il comporte au moins les étapes suivantes, pour une rafale :

- une étape (21) où la rafale est scindée en au moins deux demi-rafales, une rafale avant et une rafale arrière ;
- une étape (22) de filtrage des demi-rafales pour associer une valeur d'azimut $\theta_1$ et une valeur d'amplitude $A_1$ à la rafale avant, et une valeur d'azimut $\theta_2$ et une valeur d'amplitude $A_2$ à la rafale arrière ;
- une étape (23) d'obtention de l'azimut Az de la cible comme correspondant au maximum d'une gaussienne (31) passant par les points de composantes $(\theta_1, A_1)$, $(\theta_2, A_2)$.

**2.** Procédé selon la revendication 1, **caractérisé en ce que** les rafales avant et arrière comportent chacune N/2 impulsions.

**3.** Procédé selon l'une quelconque des revendications précédentes, **caractérisé en ce que** l'azimut Az est donné par la relation suivante :

$$Az = \left(\frac{\theta_1 + \theta_2}{2}\right) + \frac{\theta_{3dB}^2}{2a(\theta_1 - \theta_2)} Log \frac{A_1}{A_2} \qquad (1)$$

- $\theta_{3dB}$ étant la largeur du lobe d'àntenne du radar en azimut exprimée à -3dB ;
- a étant une constante.

**4.** Procédé selon l'une quelconque des revendications précédentes, **caractérisé en ce que** la rafale contient au niveau de la réception une seule information de détection.

**5.** Procédé selon l'une quelconque des revendications précédentes, **caractérisé en ce que** le radar est du type ASR.

**Claims**

**1.** Method to determine the azimuth of a target with a radar that sends out a detection wave of N-pulse bursts, **characterized in that** the method comprises at least the following steps for a burst:

- a step (21) where the burst is split up into at least two half-bursts, a front burst and a rear burst;
- a step (22) of filtering the half-bursts to associate an azimuth value $\theta_1$ and an amplitude value $A_1$ with the front burst, and an azimuth value $\theta_2$ and an amplitude value $A_2$ with the rear burst;
- a step (23) of obtaining the azimuth Az of the target at a value corresponding to the maximum of a Gaussian (31) passing through the points having components $(\theta_1, A_1)$ and $(\theta_2, A_2)$ .

**2.** Method according to Claim 1, **characterized in that** the front and rear bursts each comprises N/2 impulsions.

**3.** Method according to any one of the preceding claims, **characterized in that** the azimuth Az is given by the following relationship:

$$Az = \left(\frac{\theta_1 + \theta_2}{2}\right) + \frac{\theta_{3dB}^2}{2a(\theta_1 - \theta_2)} Log \frac{A_1}{A_2}$$

"$\theta_{3dB}$" being the width of the antenna lobe of the radar in azimuth, expressed at -3dB;

- "a" being a constant.

**4.** Method according to any one of the preceding claims, **characterized in that** the burst contains only one piece of detection information at reception.

5.  Method according to any one of the preceding claims, **characterized in that** the radar is of the ASR type.

**Patentansprüche**

1.  Verfahren zur Bestimmung des Azimuts eines Ziels durch einen Radar, wobei der Radar eine Welle für Erfassungen in Salven von N Impulsen aussendet, **dadurch gekennzeichnet, dass** es für eine Salve mindestens die folgenden Schritte umfasst:

    - einen Schritt (21), bei dem die Salve in mindestens zwei Salvenhälften, nämlich eine vordere Salve und eine hintere Salve, aufgeteilt wird;
    - einen Schritt (22) zum Filtern der Salvenhälften, um einen Azimutwert $\theta_1$ und einen Amplitudenwert $A_1$ mit der vorderen Salve und einen Azimutwert $\theta_2$ und einen Amplitudenwert $A_2$ mit der hinteren Salve zu verbinden;
    - einen Schritt (23) zum Erhalten des Azimuts Az des Ziels als dem Maximum einer Gauß-Kurve (31) entsprechend, die durch die Punkte der Komponenten $(\theta_1, A_1)$, $(\theta_2, A_2)$ geht.

2.  Verfahren nach Anspruch 1, **dadurch gekennzeichnet, dass** die vorderen und hinteren Salven jeweils N/2 Impulse umfassen.

3.  Verfahren nach einem der vorhergehenden Ansprüche,
    **dadurch gekennzeichnet, dass** der Azimut Az durch folgende Beziehung gegeben ist:

$$\mathrm{Az} \; = \; \left( \frac{\theta_1 \; + \; \theta_2}{2} \right) \; + \; \frac{\theta_{3dB}^2}{2a(\theta_1 \; - \; \theta_2)} \; \mathrm{Log} \; \frac{A_1}{A_2} \qquad\qquad (1)$$

    - wobei $\theta_{3dB}$ die Breite der Radarstrahlungskeule im bei -3dB ausgedrückten Azimut ist;
    - wobei a eine Konstante ist.

4.  Verfahren nach einem der vorhergehenden Ansprüche, **dadurch gekennzeichnet, dass** die Salve beim Empfang eine einzige Erfassungsinformation enthält.

5.  Verfahren nach einem der vorhergehenden Ansprüche, **dadurch gekennzeichnet, dass** der Radar vom Typ ASR ist.

FIG.1

FIG.3

RAFALE DE N RÉCURRENCES
SCINDÉE EN DEUX DEMIES RAFALES
DE N/2 RÉCURRENCES — 21

FILTRAGE DES DEUX DEMIES RAFALES — 22

CALCUL DE L'AZIMUT — 23

# FIG.2